# EUROPÄISCHE PATENTANMELDUNG

(11) **EP 0 730 333 A2**
(43) Veröffentlichungstag der Anmeldung: **04.09.1996**
(21) Anmeldenummer: 96102961.8
(22) Anmeldetag: 01.03.1996
(51) Int. Cl.: H02J 3/38, B63H 23/24

(54) **Schiffsantriebsanlage**

(30) Priorität: 03.03.1995 DE 19507451; 20.06.1995 DE 19522302
(71) Anmelder: Kranert, Klaus, Dr., 22559 Hamburg (DE)
(72) Erfinder: Kranert, Klaus, Dr., 22559 Hamburg (DE)

(57) **Zusammenfassung**

Bei einer Schiffsantriebsanlage, die ein Drehstrom-Fahrnetz (10), zwei getrennt gespeiste, miteinander kuppelbare dreisträngige Fahrschienen (12, 13), mindestens zwei redundante Drehstrommotoren (22, 23) mit jeweils einer oder zwei Ständerwicklungen zum Antrieb mindestens eines Schiffspropellers (24, 25), eine Umrichterspeisung der Drehstrommotoren (22, 23) aus den Fahrschienen (12, 13) mit 3·2ⁿ-pulsiger Netzrückwirkung auf jede der Fahrschienen (12, 13) und ein Niederspannungs-Bordnetz (11) zur Stromversorgung von bordeigenen Stromverbrauchern aufweist, das an jeder der Fahrschienen (12, 13) über mindestens einen Bordnetztransformator (18, 19) angeschlossen ist, ist zwecks Verbesserung des Spannungsklirrfaktors von Fahr- und Bordnetz die Kupplung der beiden Fahrschienen (12, 13) mittels eines Längstransformators (17) mit einem Übersetzungsverhältnis von 1:1 vorgenommen, der zwischen seiner Primär- und Sekundärseite eine Phasendrehung der Spannung von (½)ⁿ·60° erzeugt, wobei n eine ganze Zahl größer Null ist. Zur gleichphasigen Einspeisung in das Bordnetz (11) erfolgt in dem mindestens einen Bordnetztransformator (19), der an der Fahrschiene mit gedrehter Spannungslage angeschlossen ist, eine Phasenrückdrehung der Spannung um den gleichen Winkel.

## Beschreibung

Die Erfindung betrifft eine Schiffsantriebsanlage der im Oberbegriff des Anspruchs 1 definierten Gattung.

Bei solchen Schiffsantriebsanlagen ist man bemüht, eine möglichst hochpulsige Rückwirkung der umrichtergespeisten Drehstrommotoren auf das Fahrnetz und auf das aus dem Fahrnetz über die Bordnetzgeneratoren gespeiste Bordnetz zu erreichen, um so einen möglichst kleinen Spannungsklirrfaktor der Netze sicherzustellen, der beispielsweise bei einer 6pulsigen Netzrückwirkung 15 % beträgt und bei einer 12pulsigen Netzrückwirkung unter 10 % gehalten werden kann. Ein zu hoher Klirrfaktor kann den Gesamtbetrieb oder den Betrieb wichtiger Verbraucher stören, so daß der Klirrfaktor einen Maximalwert nicht nur bei Normalbetrieb, sondern auch bei Manövern und Notbetrieb nicht übersteigen darf.

Bei einer bekannten Schiffsantriebsanlage dieser Art, auch Schiffspropulsionsanlage genannt, (Diesel & Gasturbine Worldwide, November 1988, Seiten 12 bis 15 "Diesel-Electric Propulsion System For Cruise Ships") wird eine 12pulsige Netzrückwirkung der Umrichter und damit ein vorteilhafter Spannungsklirrfaktor von <10 % dadurch erreicht, daß die Hälfte der Umrichter der Fahrantriebe von den Fahrschienen über Stromrichtertransformatoren mit primär- und sekundärseitiger Sternschaltung der Transformatorenwicklungen und die andere Hälfte der Umrichter über Stromrichtertransformatoren mit primärseitiger Sternschaltung und sekundärseitiger Dreieckschaltung der Transformatorenwicklungen von den miteinander gekuppelten Fahrschienen gespeist wird. Solche Stromrichtertransformatoren sind groß, schwer, überwachungsintensiv und teuer und machen einen nicht unbedeutenden Anteil der Fertigungskosten der Schiffsantriebsanlage aus.

Der Erfindung liegt die Aufgabe zugrunde, in einer Schiffsantriebsanlage der eingangs genannten Art bei vorgegebener Pulsigkeit der Netzrückwirkung des Umrichterantriebs auf jede der Fahrschienen mit geringem fertigungstechnischen Aufwand eine Verdoppelung der Pulsigkeit der Netzrückwirkung im Gesamtfahr- und Bordnetz und damit eine Verbesserung von deren Spannungsklirrfaktor zu erreichen.

Die Aufgabe ist bei einer Schiffsantriebsanlage der im Oberbegriff des Anspruchs 1 angegebenen Gattung erfindungsgemäß durch die Merkmale im Kennzeichenteil des Anspruchs 1 gelöst.

Die erfindungsgemäße Schiffsantriebsanlage hat den Vorteil, daß durch den die beiden Fahrschienen miteinander verbindenden Längstransformator die beiden Fahrschienen eine um (½)ⁿ·60° gedrehte Spannungslage zueinander aufweisen, wobei n>0 ist, und dadurch die Hälfte der Umrichter mit einer um diese Phase gedrehte Fahrnetzspannung gespeist wird. Die Folge ist eine Verdopplung der Pulsigkeit der Netzrückwirkung der Umrichter auf das Fahr- und Bordnetz, unabhängig von der Ausbildung des Umrichterantriebs. Beispielsweise würde in Anwendung der Erfindung auf die eingangs beschriebene bekannte Schiffsantriebsanlage eine 24-Pulsigkeit der Netzrückwirkung und damit ein Spannungsklirrfaktor in Fahr- und Bordnetz von ungefähr 5 % erzielt werden. Zur wiederum gleichphasigen Einspeisung der Fahrschienen ins Bordnetz werden der oder die Bordnetztransformatoren, die an der Fahrschiene mit gedrehter Spannungslage angeschlossen ist oder sind, so ausgebildet, daß er oder sie von der Primär- oder Hochspannungsseite zur Sekundär- oder Niederspannungsseite eine Phasenrückdrehung der Spannung um den gleichen Phasenwinkel von (½)ⁿ·60° bewirkt bzw. bewirken.

Bei der erfindungsgemäßen Schiffsantriebsanlage können die mindestens zwei redundanten Drehstrommotoren im Ständer oder Stator sowohl jeweils eine Ständerwicklung als auch jeweils zwei Ständerwicklungen aufweisen. Im ersten Fall ist die Ständerwicklung des einen Drehstrommotors mit der einen und die Ständerwicklung des anderen Drehstrommotors mit der anderen Fahrschiene jeweils über einen zugeordneten Umrichter verbunden. Im zweiten Fall ist jeweils von den beiden Ständerwicklungen des gleichen Drehstrommotors die eine an der einen Fahrschiene und die andere an der anderen Fahrschiene, jeweils über den ihr zugeordneten Umrichter, angeschlossen. Ein als Synchronmotor ausgebildeter Drehstrommotor mit zwei Ständerwicklungen ist beispielsweise in der eingangs genannten Literaturstelle angegeben. Die Umrichter können als indirekte Umrichter (I-Umrichter) mit Gleichstromzwischenkreis oder - wie bei großen Anlagen bevorzugt - als direkte Umrichter (D-Umrichter) sowie als zwangskommutierte Wechselrichter oder Pulswechselrichter (PWR) ausgeführt werden.

Neben der Verbesserung des Spannungsklirrfaktors der Netze hat die erfindungsgemäße Schiffsantriebsanlage noch einen weiteren Vorteil. Da die Kurzschlußreaktanz des Längstransformators im Kurzschlußfall eine Teilentkopplung der beiden Fahrschienen bewirkt, kann die Kurzschlußtragfähigkeit der im Fahrnetz vorhandenen Schalter oder Schütze um ca. ein Drittel niedriger gemacht werden, so daß preiswertere Schalter eingesetzt werden können. Alternativ kann bei unverändert hoher Kurzschlußfestigkeit der verwendeten Schalter die Fahrnetzspannung reduziert werden, so z. B. die Fahrnetzspannung von 10 kV auf 6,6 kV oder von 6,6 kV auf 3,3 kV oder von 3,3 kV auf 690 V. Beides führt zu weiteren beträchtlichen Einsparungen bei den Gestehungskosten der Schiffsantriebsanlage.

Vorteilhafte Ausführungsformen der erfindungsgemäßen Schiffsantriebsanlage mit vorteilhaften Ausgestaltungen und Weiterbildungen der Erfindung sind in den nachfolgenden Ansprüchen angegeben.

Gemäß einer vorteilhaften Ausführungsform der Erfindung sind mindestens zwei jeweils einer Ständerwicklung zugeordnete Umrichter vorgesehen, die über je eine Kommutierungsdrossel getrennt an den beiden Fahrschienen angeschlossen sind. Im Falle der beiden redundanten Drehstrommotoren mit jeweils einer Ständerwicklung sind damit zwei, im Falle der redundanten Drehstrommotoren mit jeweils zwei Ständerwicklungen vier Umrichter vorhanden. An jeder Fahrschiene liegt immer eine gleiche Anzahl von Umrichtern, im ersten Fall ein Umrichter, im zweiten Fall zwei Umrichter. Der Längstransformator ist so ausgebildet, daß die Spannung um 30° gedreht wird, und der entsprechende Bordnetztransformator sorgt für eine Spannungsrückdrehung um ebenfalls 30°. Bei einem Drehstrom-Propellerantrieb mit nur 6pulsiger Netzrückwirkung (n=1) auf jede der Fahrschienen ergibt sich damit insgesamt eine 12-Pulsigkeit der Netzrückwirkung im Fahrnetz und im Bordnetz, ohne daß hierzu - wie bei der eingangs beschriebenen bekannten Schiffsantriebsanlage - die Einschaltung von Stromrichtertransformatoren zwischen Umrichter und Fahrnetz erforderlich wäre. Der komplette Wegfall der schweren und teuren Stromrichtertransformatoren pro Umrichter bei unverändert gutem Spannungsklirrfaktor von kleiner 10 % reduziert die Anlagekosten erheblich und spart Gewicht und Bauraum. Die fehlenden Stromrichtertransformatoren und die damit wegfallenden Transformatorenverluste führen zu einer merkbaren Verbesserung des Übertragungswirkungsgrades und die sich reduzierende Zahl der Bauteile der Schiffsantriebsanlage reduziert die Ausfallwahrscheinlichkeit der Gesamtanlage.

Gemäß einer bevorzugten Ausführungsform der Erfindung läßt sich die 30°-Phasendrehung der Spannung im Längstransformator und die 30°-Phasenrückdrehung der Spannung in dem mindestens einen an der einen Fahrschiene angeschlossenen Bordnetztransformator in einfacher Weise dadurch realisieren, daß die Primärwicklung des Längstransformators in Stern und die Sekundärwicklung des Längstransformators in Dreieck und die an der Fahrschiene angeschlossene Primärwicklung des Bordnetztransformators in Dreieck und die an dem Bordnetz angeschlossene Sekundärwicklung des Bordnetztransformators in Stern geschaltet ist. Der mindestens eine an der anderen Fahrschiene liegende Bordnetztransformator hat die gleiche Schaltgruppen auf Primär- und Sekundärseite, also z. B. jeweils eine Dreieckschaltung.

Gemäß einer vorteilhaften Ausführungsform der Erfindung sind die Kommutierungsdrosseln in den Anschlußsträngen der Umrichter zu den dreisträngigen Fahrschienen als Duplexdrosseln mit Ausgleichswicklungen ausgebildet, und der fahrschienenseitige Anschluß eines jeden Bordnetztransformators ist über die Ausgleichswicklungen mindestens einer, vorzugsweise mehrerer oder aller, der Duplexdrosseln in den Anschlußsträngen der an der gleichen Fahrschiene wie der Bordnetztransformator angeschlossenen Umrichter geführt. Durch diese schaltungstechnische Maßnahme wird der Klirrfaktor noch wesentlich verbessert. Selbst bei Notbetrieb mit nur einer Fahrschiene erfolgt eine vollständige Kompensation der dann auf 6pulsige Umrichtereinspeisung zurückgehenden Oberwellen, so daß der Klirrfaktor nicht nur im Normalbetrieb, sondern auch in Extremfällen einen die Verbraucher im Bordnetz störenden Grenzwert nicht überschreitet.

Gemäß einer weiteren Ausführungsform der Erfindung ist jeder der einer Ständerwicklung zugeordneten und über eine Kommutierungs- oder Duplexdrossel an einer der beiden Fahrschienen angeschlossenen Umrichter als Serienschaltung zweier I-Umrichter ausgebildet. Die Fahrnetzspannung ist dabei auf die Größenordnung der Bordnetzspannung gesenkt und beträgt beispielsweise nur noch 690 V. Diese Ausbildung der Umrichter in Verbindung mit dem Längstransformator ermöglicht zum einen eine Verdopplung der an den Drehstrommotoren anliegenden Betriebsspannung gegenüber der Fahrnetzspannung und zum anderen die Speisung der beiden hintereinander geschalteten 6-Pulsbrücken direkt aus dem Fahrnetz bei Wegfall jeglicher Stromrichtertransformatoren. Bei Einhaltung eines wegen der 12pulsigen Netzrückwirkung ausreichend guten Spannungsklirrfaktors von kleiner 10 % läßt sich die Schiffsantriebsanlage mit Niederspannung in der Größenordnung der Bordnetzspannung betreiben und dabei eine hohe Motorleistung bei vertretbarem Leistungsgewicht erzielen.

Gemäß einer vorteilhaften Ausführungsform der Erfindung sind zur Umrichterspeisung der Drehstrommotoren mit 12pulsiger Netzrückwirkung (n=2) auf jede der Fahrschienen mindestens zwei jeweils einer Ständerwicklung zugeordnete Umrichter vorgesehen, die über je einen Stromrichtertransformator getrennt an den beiden Fahrschienen angeschlossen sind, wobei der eine Transformator gleiche und der andere Transformator ungleiche Wicklungsschaltgruppen auf der Primär- und Sekundärseite aufweist. Die Phasendrehung des Längstransformators und die Phasenrückdrehung des einen Bordnetztransformators beträgt jeweils 15°. der Spannungsklirrfaktor fällt durch die erzielte 24-Pulsigkeit der Netzrückwirkung in Fahr- und Bordnetz auf ungefähr 5 %.

Gemäß einer weiteren Ausführungsform der Erfindung sind zur Umrichterspeisung der Drehstrommotoren mit 24pulsiger Netzrückwirkung (n=3) auf jede der Fahrschienen mindestens zwei jeweils einer Ständerwicklung zugeordnete Umrichtereinheiten aus jeweils zwei in Reihe geschalteten indirekten Umrichtern (I-Umrichtern) vorgesehen und die Umrichtereinheiten über je zwei Stromrichtertransformatoren getrennt an den beiden Fahrschienen angeschlossen, von denen der eine Stromrichtertransformator gleiche und der andere Stromrichtertransformator ungleiche Wicklungsschaltgruppen auf seiner Primär- und Sekundärseite aufweist. Die Oberspannungswicklung der an der einen Fahrschiene angeschlossenen Stromrichtertransformatoren weist einen Phasenschwenkwinkel von 7,5° und die Oberspannungswicklung der an der anderen Fahrschiene angeschlossenen Stromrichtertransformatoren einen Phasenschwenkwinkel von -7,5° auf. Die Phasendrehung des Längstransformators und die Phasenrückdrehung des einen Bordnetztransformators beträgt jeweils 7,5°. Damit ergibt sich eine 48pulsige Netzrückwirkung auf das Fahr- und Bordnetz, und der Spannungsklirrfaktor wird kleiner als 4 %.

Die bei diesen beiden vorgenannten Ausführungsformen der Erfindung vorgesehenen Stromrichtertransformatoren sind erforderlich, um zur Beherrschung der Kurzschlußleistung in der Schiffsantriebsanlage die Spannung für die Propellerantriebe zu erhöhen. Diese Stromrichtertransformatoren ergeben durch ihre vorstehend beschriebene Ausführung eine 12- bzw. 24-Pulsigkeit, die durch den erfindungsgemäßen Längstransformator mit entsprechender Phasendrehung noch verdoppelt wird, was die Netzqualität wesentlich verbessert.

Gemäß einer bevorzugten Ausführungsform der Erfindung ist im Sternpunkt des Längstransformators eine Kurzschlußbedämpfungsvorrichtung angeschlossen, die so ausgebildet ist, daß sie bei Erreichen eines vorgegebenen Grenzwerts des Kurzschlußstroms den Sternpunkt öffnet und einen den Kurzschlußstrom auf diesen Grenzwert begrenzenden Widerstand wirksam werden läßt. Hierzu weist die Kurzschlußbedämpfungsvorrichtung steuerbare Halbleiterschalter und eine Überwachungs- und Steuereinheit (Steuerlogik) auf, die bei Erreichen des Kurzschlußstrom-Grenzwerts über die Halbleiterschalter den Widerstand in kürzester Zeit (Millisekunden-Bereich) einschaltet und nach Spannungswiederkehr oder zeitgesteuert nach Abklingen des subtransienten Stromstoßes wieder kurzschließt. Der Widerstand ist größenmäßig annähernd der Nennreaktanz des Längstransformators bemessen, und die Halbleiterschalter mit antiparallel geschalteten Dioden, die vorzugsweise als Antiduktoren ausgebildet werden, sind für Dauerbetrieb mit Nennquerstrom des Längstransformators ausgelegt.

Insgesamt läßt sich mit dieser Kurzschlußentkopplung der Fahrschienen einerseits und der Entkopplung der Kurzschlußströme der Umrichter und des Bordnetzes durch die Duplexdrosseln sowie durch die Bedämpfung des Kurzschlußstromes der Bordmotoren durch die Kurzschlußreaktanz der Bordnetztransformatoren in Reihe mit den Reaktanzen der Ausgleichswicklungen der Duplexdrosseln andererseits die Leistung der Schiffsantriebsanlage wesentlich vergrößern, so z. B. bei 6,6 kV und 3,3 kV Fahrnetzspannung um ca. 30 % und bei 690 V Fahrnetzspannung um 100 %. Auch diese Leistungssteigerung der Schiffsantriebsanlage trägt zur Kostensenkung bei.

Die Erfindung ist anhand von in der Zeichnung dargestellten Ausführungsbeispielen im folgenden näher beschrieben. Es zeigen:
- Fig. 1: einen Schaltplan einer Schiffsantriebsanlage,
- Fig. 2: einen Schaltplan der gleichen Schiffsantriebsanlage, etwas modifiziert,
- Fig. 3: ausschnittsweise einen Schaltplan einer gleichen Schiffsantriebsanlage mit einer Kurzschlußbedämpfungsvorrichtung,
- Fig. 4: einen Schaltplan einer kleineren Schiffsantriebsanlage gemäß einem weiteren Ausführungsbeispiel,
- Fig. 5 und 6: jeweils einen Schaltplan einer Schiffsantriebsanlage gemäß einem dritten und vierten Ausführungsbeispiel,
- Fig. 7: einen Schaltplan einer Schiffsantriebsanlage gemäß einem fünften Ausführungsbeispiel.

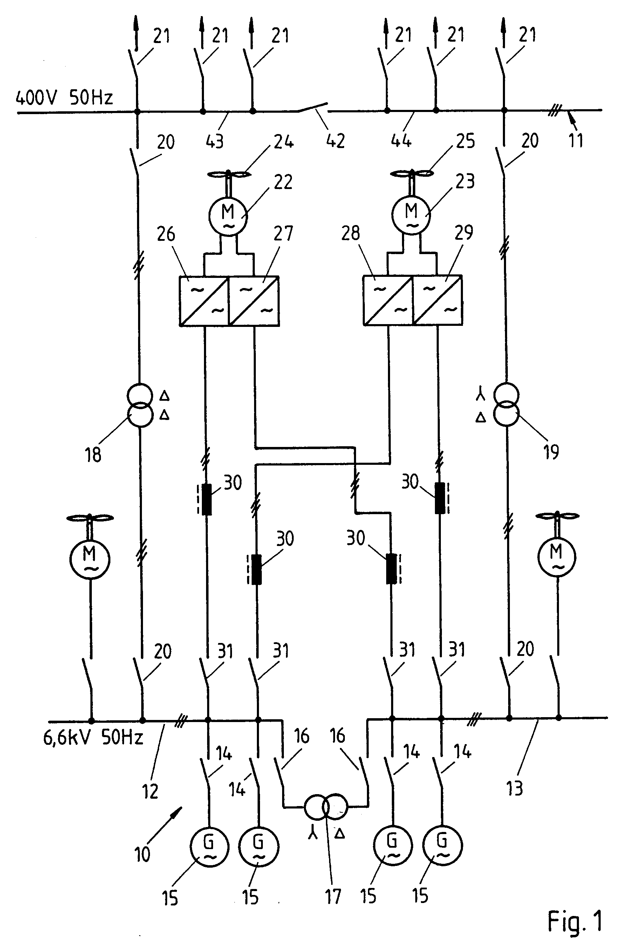

Die in Fig. 1 als Schaltplan dargestellte Schiffsantriebsanlage oder Schiffspropulsionsanlage weist ein Drehstrom-Fahrnetz 10 mit einer Fahrnetzspannung von beispielsweise 6,6 kV zur Versorgung eines elektrischen Drehstrom-Propellerantriebs und ein Niederspannungs-Bordnetz 11 mit einer Bordnetzspannung von beispielsweise 400 V zur Stromversorgung von bordeigenen Stromverbrauchern auf. Das Fahrnetz 10 weist zwei getrennte, jeweils dreisträngige Fahrschienen 12 und 13 auf, die getrennt gespeist werden und hierzu über Trennschalter 14 an jeweils mehreren, hier zwei, parallel laufenden Synchrongeneratoren 15 angeschlossen sind. Die Synchrongeneratoren 15 werden in bekannter Weise von Dieselmotoren oder Gasturbinen angetrieben. Die Leistung der jeweils eine Fahrschiene 12, 13 speisenden Synchrongeneratoren 15 ist in der Regel gleich groß. Die beiden Fahrschienen 12, 13 sind unter Zwischenschaltung zweier Kupplungsschalter 16 über einen Längstransformator 17 miteinander verbunden. Der Längstransformator 17 weist ein Übersetzungsverhältnis von 1:1 auf und ist so ausgelegt, daß er zwischen Primär- und Sekundärseite eine Phasendrehung der Spannung von 30° erzeugt. Hierzu ist die Primärwicklung des Längstransformators 17 in Stern und die Sekundärwicklung des Längstransformators 17 in Dreieck geschaltet. Damit haben die beiden Fahrschienen 12, 13 zueinander eine um 30° gedrehte Spannungslage.

Das Niederspannungs-Bordnetz 11 mit seinen über Schalter 21 anschließbaren Stromverbrauchern wird aus dem Drehstrom-Fahrnetz 10 gespeist und ist hierzu über einen ersten Bordnetztransformator 18 an der Fahrschiene 12 und über einen zweiten Bordnetztransformator 19 an der Fahrschiene 13 angeschlossen. Zum Trennen der Bordnetztransformatoren 18, 19 von den beiden Netzen 10, 11 sind jedem Bordnetztransformator 18, 19 zwei Leistungsschalter 20 zugeordnet. Aufgrund der unterschiedlichen Phasenlage der Fahrnetzspannungen auf den beiden Fahrschienen 12, 13 wird zur gleichphasigen Einspeisung in das Bordnetz 11 der Bordnetztransformator 19 so ausgebildet, daß er von seiner an der Fahrschiene 13 liegenden Hochspannungsseite zu seiner am Bordnetz 11 liegenden Niederspannungsseite eine Phasenrückdrehung der Spannung von 30° bewirkt. Hierzu ist die Transformatorenwicklung auf der Hochspannungsseite des Bordnetztransformators 19 in Dreieck und auf der Niederspannungsseite in Stern geschaltet. Der andere Bordnetztransformator 18 hat hingegen gleichphasige Schaltgruppen, seine beiden Wicklungen sind also jeweils in Dreieck oder jeweils in Stern geschaltet.

Der am Fahrnetz 10 betriebene Drehstrom-Propellerantrieb weist zwei Synchronmotoren 22, 23 auf, die jeweils einen Festpropeller 24 bzw. 25 antreiben. Die beiden Synchronmotoren 22, 23 können aber auch auf einen einzigen Propeller wirken. Jeder Synchronmotor 22 bzw. 23 trägt im Ständer oder Stator zwei redundante Ständerwicklungen, die über je einen I-Umrichter 26, 27 bzw. 28, 29 mit Drehstrom aus dem Fahrnetz 10 gespeist werden. Von den einem Synchronmotor 22 bzw. 23 zugehörigen Umrichtern 26, 27 bzw. 28, 29 ist ein Umrichter 26 bzw. 28 über Kommutierungsdrosseln 30 an die eine Fahrschiene 12 und der andere Umrichter 27 bzw. 29 über Kommutierungsdrosseln 30 an die andere Fahrschiene 13 gelegt. In den Anschlußsträngen sind zwischen Kommutierungsdrosseln 30 und den Fahrschienen 12, 13 wiederum Leistungsschalter 31 angeordnet. Anstelle der indirekten Umrichter (I-Umrichter) 26 bis 29 können auch direkte Umrichter (D-Umrichter), zwangskommutierte Wechselrichter oder Pulswechselrichter (PWR) verwendet werden. Selbstverständlich ist es möglich, auch nur einen Synchronmotor 22 oder 23 oder mehr als zwei Synchronmotoren 22, 23 am Fahrnetz 10 zu betreiben. Jeder weitere Synchronmotor mit zwei Ständerwicklungen wird dann, wie zu den Synchronmotoren 22, 23 beschrieben, an die beiden Fahrschienen 12, 13 angeschlossen.

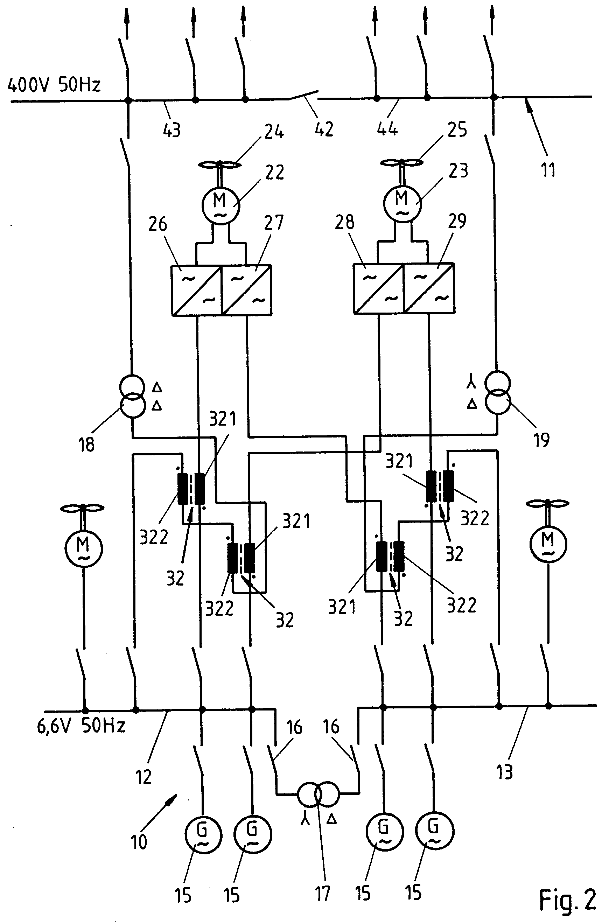

Die in Fig. 2 im Schaltplan dargestellte Schiffsantriebsanlage ist gegenüber der zu Fig. 1 beschriebenen insofern modifiziert, als die Kommutierungsdrosseln 30 in den Anschlußsträngen der Umrichter 26 bis 29 zu den dreisträngigen Fahrschienen 12 und 13 durch sog. Duplexdrosseln 32 ersetzt sind, die neben den in den Anschlußsträngen liegenden Drosselwicklungen 321 noch mit diesen induktiv gekoppelte Ausgleichswicklungen 322 aufweisen. Die Drosselwicklungen 321 und die Ausgleichswicklungen 322 einer Duplexdrossel 32 sind gegensinnig gewickelt. In Abwandlung der Schaltung in Fig. 1 ist nunmehr die Hochspannungsseite der Bordnetztransformatoren 18, 19 nicht direkt an den Fahrschienen 12 bzw. 13, sondern über die Reihenschaltung der Ausgleichswicklungen 322 derjenigen Duplexdrosseln 32 angeschlossen, deren Drosselwicklungen 321 an der gleichen Fahrschiene 12 bzw. 13 liegen. So ist die Hochspannungsseite des Bordnetztransformators 18 über die beiden Ausgleichswicklungen 322 der beiden Duplexdrosseln 32 an die Fahrschiene 12 geführt, deren Drosselwicklungen 321 einmal in den Anschlußsträngen des Umrichters 26 zur Fahrschiene 12 und einmal in den Anschlußsträngen des Umrichters 28 zur gleichen Fahrschiene 12 liegen. In gleicher Weise ist die Hochspannungsseite des Bordnetztransformators 19 über die Reihenschaltung der Ausgleichswicklungen 321 der beiden Duplexdrosseln 32 an die Fahrschiene 13 geführt, deren Drosselwicklungen 321 einmal in den Anschlußsträngen des Umrichters 27 zu der Fahrschiene 13 und einmal in den Anschlußsträngen des Umrichters 29 zu der Fahrschiene 13 liegen.

Durch diese Duplexdrosseln 32 erfolgt eine wesentliche Verbesserung des Klirrfaktors, wobei sogar im Einschienenbetrieb, der hier 6pulsig erfolgt, eine vollständige Kompensation der Oberwellen erreicht wird. Die Mehrkosten der Duplexdrosseln 32 gegenüber den Kommutierungsdrosseln 30 in Fig. 1 sind minimal. Im übrigen ist der Aufbau und die Wirkungsweise dieser Schiffsantriebsanlage gleich der zu Fig. 1 beschriebenen, so daß gleiche Bauteile mit gleichen Bezugszeichen versehen sind.

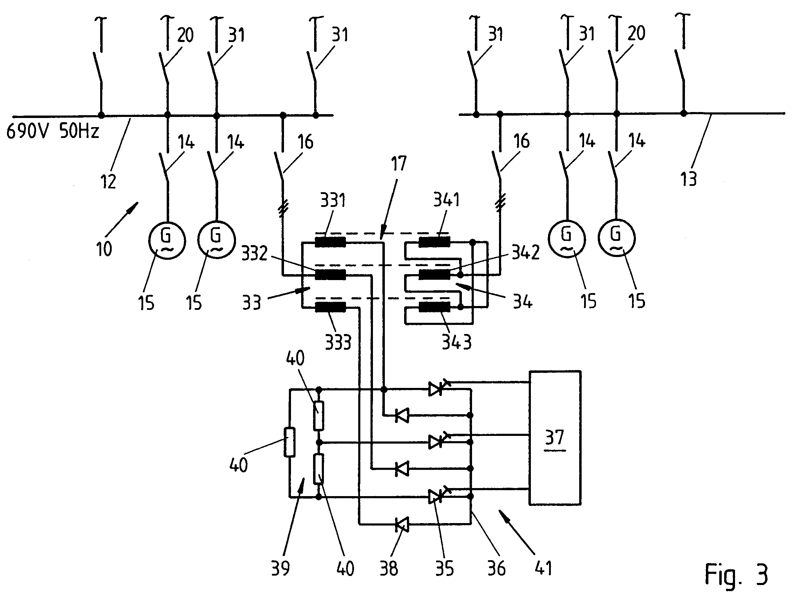

In Fig. 3 ist ausschnittsweise der Schaltplan einer Schiffsantriebsanlage dargestellt, die identisch der in Fig. 1 und 2 beschriebenen ist, allerdings mit dem Unterschied, daß sie mit einer kleineren Fahrnetzspannung von 690 V betrieben wird. Bei dem die beiden Fahrschienen 12, 13 miteinander verbindenden Längstransformator 17 ist die in Stern geschaltete Primärwicklung mit den Wicklungssträngen 331 bis 333 mit 33 und die in Dreieck geschaltete Sekundärwicklung mit den Wicklungssträngen 341 bis 343 mit 34 gekennzeichnet. Die Wicklungsstränge 331 bis 333 sind über je einen steuerbaren Halbleiterschalter 35 mit antiparalleler Diode 38, vorzugsweise einem Antiduktor, mit dem Sternpunkt 36 verbunden. Die Steuerelektroden der Halbleiterschalter 35 sind an einer Überwachungs- und Steuereinheit 37 angeschlossen. Die drei Wicklungsstränge 331 bis 333 der Primärwicklung 33 sind zusätzlich an einem Widerstandsnetzwerk 39 aus z. B. drei in Dreieck geschalteten Widerständen 40 angeschlossen. Das Widerstandsnetzwerk 39, die Halbleiterschalter 35 und die Überwachungs- und Steuereinheit 37 bilden eine Kurzschlußbedämpfungsvorrichtung 41, die bei Erreichen eines Grenzwerts des Kurzschlußstroms den Sternpunkt 36 öffnet und die Widerstände 40 so schnell einschaltet, daß der Kurzschlußstrom nicht wesentlich über den vorgegebenen Grenzwert ansteigen kann. Nach Wiederkehr der Spannung oder zeitgesteuert nach Abklingen des subtransienten Stromstoßes werden die Widerstände 40 wieder kurzgeschlossen, wozu die Halbleiterschalter 35 von der Überwachungs- und Steuereinheit 37 wieder leitend geschaltet werden. Der Widerstand des Widerstandsnetzwerks 39 wird größenmäßig annähernd der Nennreaktanz des Längstransformators 17 ausgelegt, wärmemäßig jedoch minimal für eine Stromflußzeit von ca. 1 sec. Die als Antiduktoren ausgebildeten Halbleiterschalter 35 werden für Dauerbetrieb mit Nennquerstrom ausgelegt.

Mit dieser Kurzschlußentkopplung der beiden Fahrschienen 12, 13 einerseits und der Entkopplung der Kurzschlußströme der Umrichter 26 bis 29 und des Bordnetzes 11 durch den Duplexdrosseleffekt sowie durch die Bedämpfung des Anteils des Kurzschlußstroms von Bordnetzmotoren durch die Kurzschlußreaktanz der Bordnetztransformatoren 18, 19 in Reihe mit den Reaktanzen der Ausgleichswicklungen 322 der Duplexdrosseln 32 andererseits läßt sich die Kurzschlußleistung einer Fahrschiene 12 bzw. 13 bei 690 V Fahrnetzspannung praktisch verdoppeln. Die Leistung des Fahrnetzes 10 steigt auf das Doppelte.

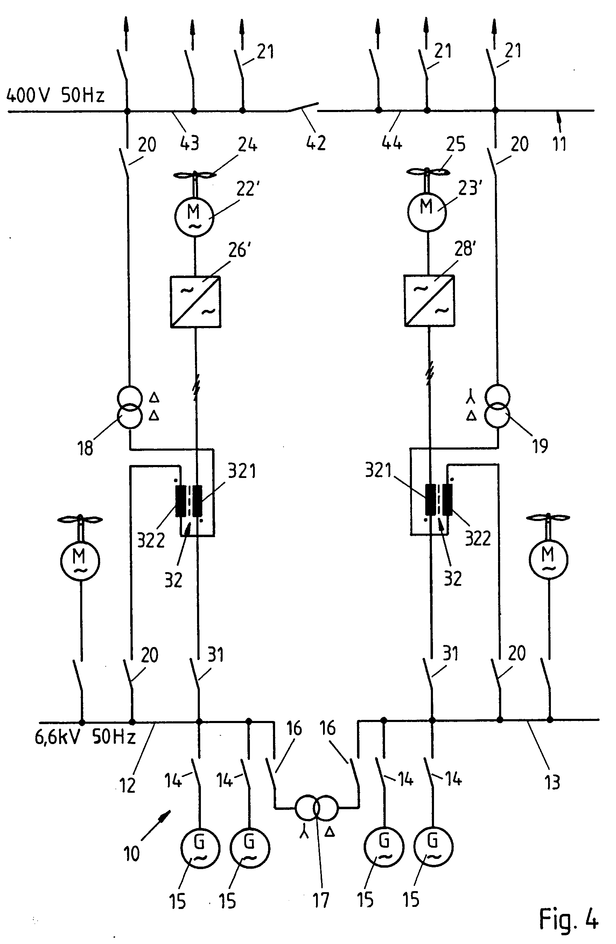

Fig. 4 zeigt den Schaltplan einer kleinen Schiffsantriebsanlage, bei welcher die beiden als Synchronmotoren 22' und 23' ausgebildeten Drehstrommotoren nur jeweils eine Ständerwicklung im Ständer oder Stator aufweisen. Die Synchronmotoren 22' und 23' treiben wiederum jeweils einen Festpropeller 24 bzw. 25 an, können aber auch auf nur einen Antriebspropeller wirken. Entsprechend der nur einen Ständerwicklung ist jedem Synchronmotor 22' bzw. 23' nur ein Umrichter 26' bzw. 28' zugeordnet, der vorzugsweise als I-Umrichter ausgeführt ist. In den Anschlußsträngen des Umrichters 26' bzw. 28' zu der Fahrschiene 12 bzw. 13 sind wiederum die Drosselwicklungen 321 einer Duplexdrossel 32 eingeschaltet, über deren Ausgleichswicklungen 322 die drei Anschlußstränge des Bordnetztransformators 18 zu der Fahrschiene 12 bzw. des Bordnetztransformators 19 zu der Fahrschiene 13 geführt sind. Im übrigen entsprechen Aufbau und Wirkungsweise dieser kleineren Schiffsantriebsanlage den zu Fig.1 bis 3 beschriebenen, sodaß gleiche Bauteile mit gleichen Bezugszeichen versehen sind.

In modernen Schiffen ist an das Bordnetz eine große Zahl von Gleichrichterbrücken und Stromrichterantrieben angeschlossen. Sie haben bei einem Fahrnetz mit nur einer Fahrschiene oder zwei gleichphasigen Teilfahrschienen eine starke 6pulsige Rückwirkung auf die Spannungsoberwellen und den Klirrfaktor. Durch die vorstehend beschriebene Aufteilung des Fahrnetzes 10 auf die beiden durch den Längstransformator 17 verbundenen Fahrschienen 12, 13 mit einer durch den Längstransformator 17 gedrehten Spannungslage von (½)ⁿ·60° mit n>0, im Beispiel der Fig. 1 bis 4 30°, zueinander wird auch die 6pulsige Netzrückwirkung dieser Verbraucher zu einer 12-Pulsigkeit und führt zu einer Reduzierung der Spannungsoberwellen. Die maximale Verbesserung des Klirrfaktors ergibt sich durch eine gleichmäßige Verteilung dieser Stromverbraucher auf die beiden Fahrschienen 12, 13. Hierzu ist - wie allgemein üblich - das Bordnetz 11 in zwei Teilnetze mit je einer dreisträngigen Teilsammelschiene 43, 44 unterteilt. Die beiden Teilsammelschienen 43, 44 können für Notbetrieb über einen Kupplungsschalter 42 miteinander verbunden werden (Fig. 1, 2 und 4). Die Einspeisung vom Fahrnetz 10 her erfolgt getrennt in die beiden Teilnetze des Bordnetzes 11, wozu der mindestens eine Bordnetztransformator 18 an der einen Teilsammelschiene 43 und der mindestens eine Bordnetztransformator 19 an der anderen Teilsammelschiene 44 angeschlossen ist. Die am Bordnetz 11 abgeschlossenen Stromverbraucher oder Stromverbrauchsgruppen mit Stromrichtern werden nunmehr leistungsmäßig möglichst gleichmäßig auf die beiden Teilsammelschienen 43, 44 aufgeteilt.

Bei einem Fahrnetz 10, das eine etwa gleiche Niederspannung wie das Bordnetz 11 hat, kann bei der Bordnetzeinspeisung vom Fahrnetz 10 her auf die bei den Beispielen der Fig. 1 bis 4 vorgesehene 30°-Phasenrückdrehung der Spannung durch den mindestens einen Bordnetztransformator 19 verzichtet werden. Für die Versorgung des Bordnetzes 11 von Land aus, beim Liegen des Schiffes im Hafen, ist dann ein Landanschlußformator vorzusehen, der mit einer Dreieckwicklung auf der Primärseite sowie mit einer Sternwicklung und einer Dreieckwicklung auf der Sekundärseite ausgestattet ist. Jede Sekundärwicklung liegt an einer der Teilsammelschienen 43, 44 des Bordnetzes 11. Auch dadurch wird eine 12pulsige Rückwirkung auf das Landnetz erreicht.

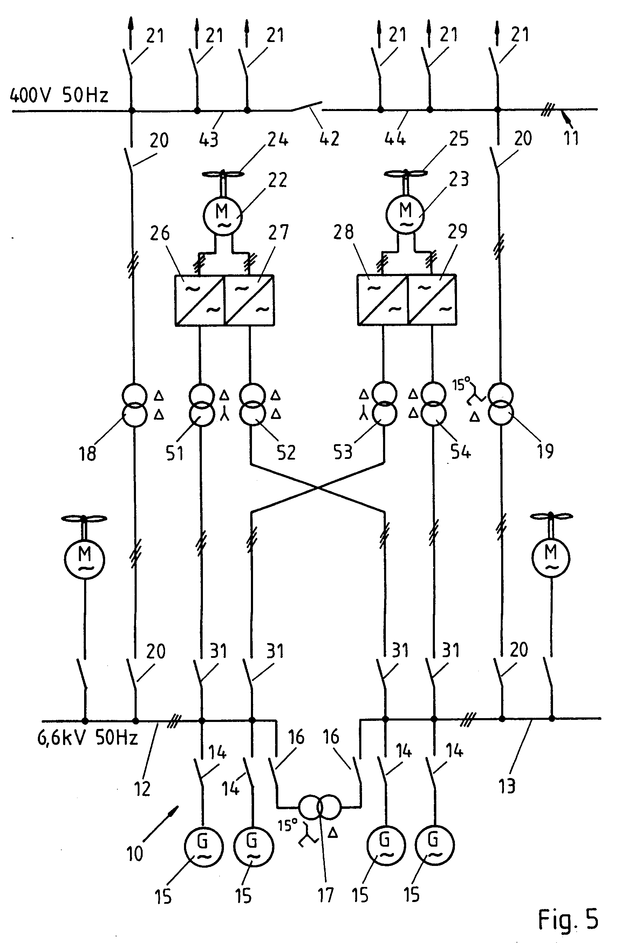

Die in Fig. 5 im Schaltplan skizzierte Schiffsbetriebsanlage ist insoweit gegenüber der in Fig. 1 beschriebenen Schiffsbetriebsanlage abgeändert, als die Umrichter 26 bis 29 nicht über Kommutierungsdrosseln, sondern über je einen Stromrichtertransformator 51 bis 54 an den beiden Fahrschienen 12, 13 angeschlossen sind. Von den zwei jeweils einem Synchronmotor 22 bzw. 23 zugeordneten Stromrichtertransformatoren 51, 52 bzw. 53, 54 ist jeweils einer mit der Fahrschiene 12 und der andere mit der Fahrschiene 13 verbunden, wobei der eine Stromrichtertransformator 51 bzw. 53 ungleiche Wicklungsschaltgruppen und der andere Stromrichttransformator 52 bzw. 54 gleiche Wicklungsschaltgruppen auf seiner Primär- und Sekundärseite aufweist. Im Ausführungsbeispiel der Fig. 5 sind die Transformatorenwicklungen der beiden an der Fahrschiene 12 liegenden Stromrichtertransformatoren 51, 53 in Stern-Dreieck und der an der Fahrschiene 13 liegenden Stromrichtertransformatoren 52, 54 in Dreieck-Dreieck geschaltet. Dadurch werden die Umrichter 27 und 29 gegenüber den Umrichtern 26 und 28 mit einer um 30° gedrehten Fahrnetzspannung gespeist, was zu einer 12-Pulsigkeit der Netzrückwirkung der Drehstrom-Propellerantriebe auf jede der Fahrschiene 12 und 13 führt. Der Längstransformator 17 ist so ausgelegt, daß er von seiner Primärseite zur Sekundärseite die Spannung um 15° dreht, was beispielsweise mit einer 15°-Schwenkzipfelwicklung erreicht wird. Dadurch ergibt sich eine 24pulsige Rückwirkung auf das von den beiden miteinander gekuppelten Fahrschienen 12, 13 gebildete Fahrnetz 10 und auf das Bordnetz 11 mit einem Spannungsklirrfaktor von ungefähr 5 %. Entsprechend ist der Bordnetztransformator 19 so ausgelegt, daß er die Spannungsphase wieder um 15° zurückdreht, was einen dem Längstransformator 17 entsprechenden gleichen Aufbau des Bordnetztransformators 19 mit einer 15°-Schwenkzipfelwicklung erforderlich macht. Im übrigen stimmt der Schaltplan gemäß Fig. 5 mit dem Schaltplan, der in Fig. 1 skizzierten Schiffsantriebsanlage überein, so daß gleiche Bauelemente mit gleichen Bezugszeichen versehen sind.

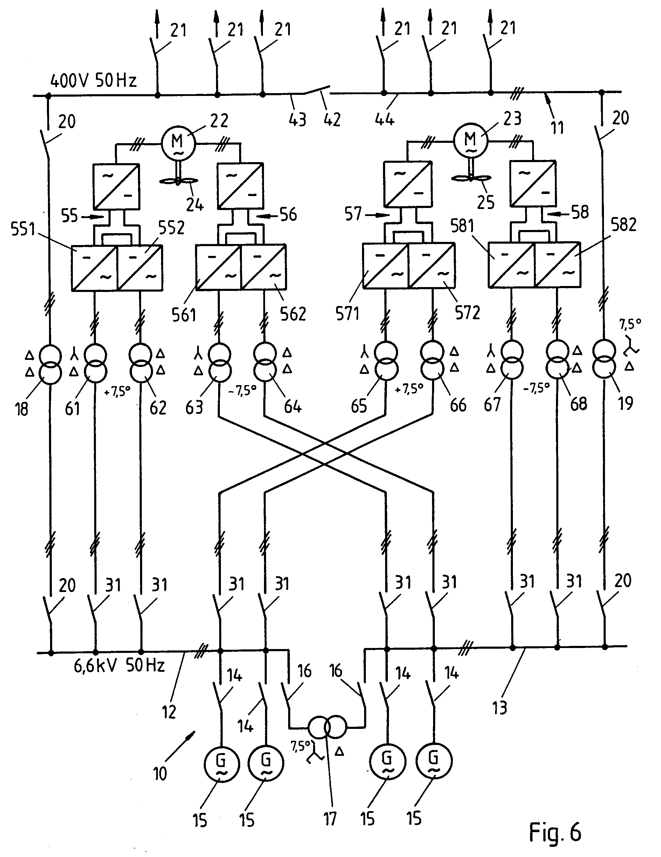

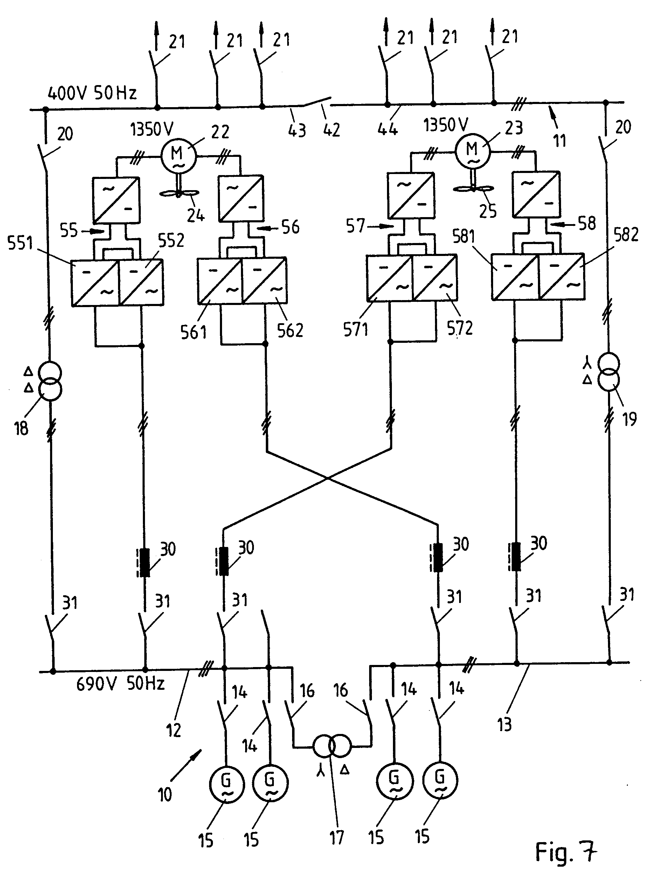

Die in Fig. 6 im Schaltplan dargestellte Schiffsantriebsanlage ist gegenüber der Schiffsantriebsanlage gemäß Fig. 5 insofern modifiziert, als die Umrichterspeisung des Synchronmotors 22 bzw. des redundanten Synchronmotors 23 eine 24pulsige Netzrückwirkung auf jede Fahrschiene 12 und 13 bewirkt. Dies wird dadurch erreicht, daß die beiden Ständerwicklungen des Synchronmotors 22 jeweils über eine Umrichtereinheit 55 bzw. 56 aus zwei hintereinander geschaltetenen I-Umrichtern 551 und 552 bzw. 561 und 562 gespeist wird. Die Reihenschaltungen dieser I-Umrichter ist in Fig. 7 im einzelnen wiedergegeben. Jeder Umrichter 551 bis 562 ist über einen Stromrichtertransformator 61 bis 64 mit den Fahrschienen 12 und 13 verbunden. Dabei sind die der Umrichtereinheit 55 zugehörigen Stromrichtertransformatoren 61, 62 an die Fahrschiene 12 und die der Umrichtereinheit 56 für die andere Ständerwicklung des Synchronmotors 22 zugehörigen Stromrichtertransformatoren 63, 64 an die Fahrschiene 13 gelegt. Von den beiden jeweils einer Umrichtereinheit 55 bzw. 56 zugehörigen Stromrichtertransformatoren 61, 62 bzw. 63, 64 weist der eine Sromrichtertransformator 61 bzw. 63 ungleiche Schaltgruppen und der andere Stromrichtertransformator 62 bzw. 64 gleiche Schaltgruppen auf der Primär- und Sekundärseite auf. Im Ausführungsbeispiel der Fig. 6 sind die Stromrichtertransformatoren 61 und 63 in Dreieck-Stern und die Stromrichtertransformatoren 62 und 64 in Dreieck-Dreieck geschaltet. Die Oberspannungswicklungen der beiden an der Fahrschiene 12 angeschlossenen und der Umrichtereinheit 55 zugeordneten Stromrichtertransformatoren 61, 62 weist einen Phasenschwenkwinkel von 7,5° und die Oberspannungswicklung der an der Fahrschiene 13 angeschlossenen, der Umrichtereinheit 56 zugeordneten Stromrichtertransformatoren 63 und 64 weist einen Phasenschwenkwinkel von -7,5° auf. Dadurch ergibt sich eine Phasendrehung von 15° zwischen den an den beiden Ständerwicklungen des Synchronmotors 22 liegenden Spannungen, was zu der angesprochenen 24-Pulsigkeit der Netzrückwirkung des Drehstrom-Propellerantriebs auf jede der Fahrschienen 12, 13 führt.

Der Längstransformator 17 ist so ausgeführt, daß er zwischen seiner Primär- und Sekundärseite eine Phasendrehung der Spannung von 7,5° erzeugt, was wiederum durch eine 7,5°-Schwenkzipfelwicklung auf der Primärseite erreicht wird. Entsprechend ist der zwischen der Fahrschiene 13 und dem Bordnetz 11 liegende Bordnetzgenerator 19 so ausgebildet, daß er die 7,5-Phasendrehung des Längstransformators 17 auf der Bordnetzseite wieder rückgängig macht. Die Wicklung des Bordnetzgenerators 19 ist daher in gleicher Weise ausgeführt wie die des Längstransformators 17. Durch die um 7,5° gedrehte Phasenlage der Fahrnetzspannung zwischen Fahrschiene 12 und Fahrschiene 13 zur Speisung des Drehstrom-Propellerantriebs ergibt sich eine 48-Pulsigkeit in der Netzrückwirkung des Drehstrom-Propellerantriebs auf das Fahrnetz 10 und auf das Bordnetz 11 und deren Spannungsklirrfaktor hat sich auf unter 4 % verbessert.

Wegen der Redundanz des Synchronmotors 23 wiederholt sich die vorstehend beschriebene Schaltung zur Umrichterspeisung des Synchronmotors 22 bei dem Synchronmotor 23. Die den Ständerwicklungen des Synchronmotors 23 zugeordneten beiden Umrichtereinheiten sind mit 57 und 58 und deren in Reihe geschalteten I-Umrichter mit 571 und 571 bzw. 581 und 582 bezeichnet. Die identisch ausgebildeten Stromrichtertransformatoren sind mit den Bezugszeichen 65 bis 68 versehen.

Die in Fig. 7 als weiteres Ausführungsbeispiel im Schaltplan dargestellte Schiffsantriebsanlage unterscheidet sich von der zu Fig. 1 beschriebenen Schiffsantriebsanlage nur dadurch, daß die dort jeder Ständerwicklung der Synchronmotoren 22 und 23 zugeordneten Umrichter durch eine Umrichtereinheit 56 bis 58 ersetzt worden ist, wie sie in Fig. 6 und 7 dargestellt und beschrieben ist. Jeder der Umrichtereinheiten 55 bis 58 weist wie in Fig. 6 und 7 die beiden in Serie geschalteten I-Umrichter 551, 552 bzw. 561, 562 bzw. 571, 572 bzw. 581, 582 auf. Von den beiden einem Synchronmotor 22 bzw. 23 zugeordneten Umrichtereinheiten 55, 56 bzw. 57, 58 ist jeweils eine Umrichtereinheit 55 bzw. 57 über eine Kommutierungsdrossel 30 an die Fahrschiene 12 und die andere Umrichtereinheit 56 bzw. 58 über je eine Kommutierungsdrossel 30 an die Fahrschiene 13 angeschlossen. Anstelle der Kommutierungsdrosseln 30 können auch die Duplexdrosseln, wie sie in Fig. 2 eingesetzt sind, verwendet werden. Die Fahrnetzspannung der Fahrschienen 12, 13 beträgt 690 V. Aufgrund der in jeder der Umrichtereinheiten 55 bis 58 erfolgenden Spannungsverdopplung werden die beiden Synchonmotoren 22, 23 mit einer Betriebsspannung von 1350 V gefahren. Wie bei der Schiffsantriebsanlage in Fig. 1 ist der die beiden Fahrschienen 12, 13 kuppelnde Längstransformator 17 in Stern-Dreieck ausgeführt, so daß die Fahrnetzspannung auf der Fahrschiene 13 gegenüber der Fahrnetzspannung auf der Fahrschiene 12 um 30° gedreht ist und somit eine 12pulsige Netzrückwirkung mit einem Klirrfaktor von kleiner 10 % erhalten wird. Im Bordnetztransformator 19 erfolgt eine entsprechende Phasenrückdrehung um 30° zum Bordnetz 11 hin. Durch die Spannungsverdopplung in den Umrichtereinheiten 55 bis 58 können Motorleistungen mit über 15 MW je Propeller 24, 25 an einer Mittel-Fahrnetzspannung von 690 V mit erträglichem Kupferaufwand in den Synchronmotoren und ohne Stromrichtertransformatoren realisiert werden.

Die Erfindung ist nicht auf die beschriebenen Ausführungsbeispiele beschränkt. So können die Synchronmotoren der beiden Propellerantriebe - wie in Fig. 4 - mit nur einer Ständerwicklung ausgerüstet sein. Im Ausführungsbeispiel der Fig. 5 wären dann insgesamt zwei Umrichter und zwei Stromrichtertransformatoren vorhanden, von denen der eine wiederum gleiche Wicklungsschaltgruppen und der andere ungleiche Wicklungsschaltgruppen auf Primär- und Sekundärseite aufweist. Ein Stromrichtertransformator ist an der einen Fahrschiene und der andere an der anderen Fahrschiene angeschlossen. Im Ausführungsbeispiel der Fig. 6 kämen dann die Umrichtereinheiten 56 und 57 sowie die Stromrichtertransformatoren 63 bis 66 in Wegfall, im Ausführungsbeispiel der Fig. 8 würden die Umrichtereinheiten 56 und 57 und die beiden zugeordneten Kommutierungsdrosseln 30 entfallen.

### BEZUGSZEICHENLISTE

- 10: Drehstrom-Fahrnetz
- 11: Niederspannungs-Bordnetz
- 12: Fahrschiene
- 13: "
- 14: Leistungsschalter
- 15: Synchrongenerator
- 16: Kupplungsschalter
- 17: Längstransformator
- 18: Bordnetztransformator
- 19: "
- 20: Leistungsschalter
- 21: Schalter
- 22, 22': Synchronmotor
- 23, 23': "
- 24: Festpropeller
- 25: "
- 26, 26': I-Umrichter,
- 27: "
- 28, 28': "
- 29: "
- 30: Kommutierungsdrossel
- 31: Leistungsschalter
- 32: Duplex-Drossel
- 33: Primärwicklung Von 17
- 34: Sekundärwicklung von 17
- 35: Halbleiterschalter (Antiduktoren)
- 36: Sternpunkt
- 37: Überwachungseinheit
- 38: Diode
- 39: Widerstandsnetzwerk
- 40: Widerstände
- 41: Kurzschlußbedämpfungsvorrichtung
- 42: Kupplungsschalter
- 43: Teilsammelschiene
- 44: "
- 331: Drosselwicklung
- 332: Ausgleichswicklung
- 331-333: Wicklungsstränge
- 341-343: Wicklungsstränge
- 51: Stromrichtertransformator
- 52: "
- 53: "
- 54: "
- 55: Umrichtereinheit
- 56: "
- 57: "
- 58: "
- 59: Transformator
- 60: Schleifringe
- 61: Stromrichtertransformator λΔ + 7,50
- 62: Stromrichtertransformator ΔΔ + 7,50
- 63: Stromrichtertransformator λΔ - 7,50
- 64: Stromrichtertransformator ΔΔ - 7,50
- 65: Stromrichtertransformator λΔ + 7,50
- 66: Stromrichtertransformator ΔΔ + 7,50
- 67: Stromrichtertransformator λΔ - 7,50
- 68: Stromrichtertransformator ΔΔ - 7,50
- 551: I-Umrichtern
- 552: "
- 561: "
- 562: "
- 571: "
- 572: "
- 581: "
- 582: "

## Patentansprüche

1. Schiffsbetriebsanlage mit einem Drehstrom-Fahrnetz, das zwei getrennt gespeiste, miteinander kuppelbare dreisträngige Fahrschienen (12, 13) aufweist, mit mindestens zwei redundanten, jeweils eine oder zwei Ständerwicklungen aufweisenden Drehstrommotoren (22, 23; 22', 23'), insbesondere Synchronmotoren, zum Antrieb mindestens eines Schiffspropellers (24, 25), mit einer Umrichterspeisung der Drehstrommotoren (22, 23; 22', 23') aus den Fahrschienen (12, 13), die eine 3·2ⁿ-pulsige Netzrückwirkung auf jeder der Fahrschienen (11,13) hervorruft, und mit einem Niederspannungs-Bordnetz (11) zur Stromversorgung von bordeigenen Stromverbrauchern, das an jeder der Fahrschienen (12, 13) über mindestens einen Bordnetztransformator (18, 19) angeschlossen ist, dadurch gekennzeichnet, daß die Kupplung der beiden Fahrschienen (12, 13) mittels eines Längstransformators (17) vorgenommen ist, der zwischen Primär- und Sekundärseite eine Phasendrehung der Spannung von (½)ⁿ·60° erzeugt, und daß der mindestens eine Bordnetzgenerator (18), der an der mit der Primärseite des Längstransformators (17) verbundenen Fahrschiene (12) angeschlossen ist, gleiche Wicklungsschaltgruppen auf seiner Hochspannungs- und Niederspannungsseite aufweist und der mindestens eine Bordnetztransformator (19), der an der mit der Sekundärseite des Längstransformators (17) verbundenen Fahrschiene (13) angeschlossen ist, so ausgebildet ist, daß er von seiner Hochspannungsseite zu seiner Niederspannungsseite eine Phasenrückdrehung der Spannung von (½)ⁿ·60° bewirkt, wobei n eine ganze Zahl größer 0 ist.

2. Anlage nach Anspruch 1, dadurch gekennzeichnet, daß zur Umrichterspeisung der Drehstrommotoren mit 6pulsiger Netzrückwirkung (n=1) auf jede Fahrschiene (12, 13) mindestens zwei, jeweils einer Ständerwicklung zugeordnete Umrichter (26 bis 29) vorgesehen sind, die über je eine Kommutierungsdrossel (30) getrennt an den beiden Fahrschienen (12, 13) angeschlossen sind, und daß die Phasendrehung des Längstransformators (17) und die Phasenrückdrehung des einen Bordnetztransformators (19) jeweils 30° beträgt (Fig. 1).

3. Anlage nach Anspruch 2, dadurch gekennzeichnet, daß die Kommutierungsdrosseln als Duplexdrosseln (32) mit Ausgleichswicklungen (322) ausgebildet sind und daß der fahrschienenseitige Anschluß eines jeden Bordnetztransformators (18, 19) über die Ausgleichswicklungen (322) mindestens einer, vorzugsweise mehrerer oder aller, der Duplexdrosseln (32) in den Anschlußsträngen der an der gleichen Fahrschiene (12 bzw. 13) angeschlossenen Umrichter (26, 28 bzw. 27, 29) geführt ist (Fig. 2 und 4).

4. Anlage nach Anspruch 2 oder 3, dadurch gekennzeichnet, daß jeder der einer Ständerwicklung zugeordneten Umrichter als Umrichtereinheit (55 bis 58) aus jeweils zwei in Reihe geschalteten I-Umrichtern (551, 552 bzw. 561, 562 bzw. 571, 572 bzw. 581, 582) ausgebildet ist und daß die an den Fahrschienen (12, 13) angelegte Fahrnetzspannung in der Größenordnung der Bordnetzspannung liegt (Fig. 8).

5. Anlage nach Anspruch 1, dadurch gekennzeichnet, daß zur Umrichterspeisung der Drehstrommotoren (22, 23) mit 12pulsiger Netzrückwirkung (n=2) auf jede Fahrschiene (12, 13) mindestens zwei jeweils einer Ständerwicklung zugeordnete Umrichter (26 bis 28) vorgesehen sind, die über je einen Stromrichtertransformator (51 bis 54) getrennt an den beiden Fahrschienen (12, 13) angeschlossen sind, daß der eine Stromrichtertransformator (52, 54) gleiche und der andere Stromrichtertransformator (51, 53) ungleiche Wicklungsschaltgruppen auf seiner Primär- und Sekundärseite aufweist und daß die Phasendrehung des Längstransformators (17) und die Phasenrückdrehung des einen Bordnetztransformators (19) jeweils 15° beträgt (Fig. 5).

6. Anlage nach Anspruch 1, dadurch gekennzeichnet, daß zur Umrichterspeisung der Drehstrommotoren (22, 23) mit 24pulsiger Netzrückwirkung (n=3) auf jede Fahrschiene (12, 13) mindestens zwei jeweils einer Ständerwicklung zugeordnete Umrichtereinheiten (55 bis 58) aus jeweils zwei hintereinander geschalteten I-Umrichtern (551, 552 bzw. 561, 562 bzw. 571, 572 bzw. 581, 582) vorgesehen sind, daß die Umrichtereinheiten (55 bis 58) über jeweils zwei Stromrichtertransformatoren (61, 62 bzw. 63, 64 bzw. 65, 66 bzw. 67, 68) an den beiden Fahrschienen (12, 13) angeschlossen sind, von denen der eine Stromrichtertransformator (61, 63, 65, 67) ungleiche und der andere Stromrichtertransformator (62, 64, 66, 68) gleiche Wicklungsschaltgruppen auf seiner Primär- und Sekundärseite aufweist, daß die Oberspannungswicklung der an der einen Fahrschiene (12) angeschlossenen Stromrichtertransformatoren (61, 62 bzw. 65, 66) einen Phasenschwenkwinkel von 7,5° und die Oberspannnungswicklung der an der anderen Fahrschiene (13) angeschlossenen Stromrichtertransformatoren (63, 64 bzw. 67. 68) einen Phasenschwenkwinkel von -7,5° aufweist und daß die Phasendrehung des Längstransformators (17) und die Phasenrückdrehung des einen Bordnetztransformators (19) jeweils 7,5° beträgt (Fig. 6).

7. Anlage nach Anspruch 1, dadurch gekennzeichnet, daß am Sternpunkt (36) des Längstransformators (17) eine Kurzschlußbedämpfungsvorrichtung (41) angeschlossen ist, die so ausgebildet ist, daß sie bei Erreichen eines vorgegebenen Grenzwerts des Kurzschlußstroms den Sternpunkt (36) öffnet und einen den Kurzschlußstrom auf diesen vorgegebenen Grenzwert begrenzenden Widerstand (39) wirksam werden läßt (Fig. 3).

8. Anlage nach Anspruch 7, dadurch gekennzeichnet, daß die Kurzschlußbedämpfungsvorrichtung (41) gesteuerte Halbleiterschalter (35, 38) und eine Steuerlogik (37) aufweist, die bei Erreichen des Kurzschlußstrom-Grenzwerts über die Halbleiterschalter (35, 38) den Widerstand (39) im Millisekunden-Bereich einschaltet und zeitgesteuert nach Abklingen des subtransienten Stromstoßes oder nach Spannungswiederkehr wieder kurzschließt.

9. Anlage nach einem der Ansprüche 1 bis 10, dadurch gekennzeichnet, daß die bordnetzseitigen, mit Stromrichtern arbeitenden Stromverbraucher leistungsmäßig möglichst gleichmäßig an zwei Teilsammelschienen (43, 44) des üblicherweise in zwei Teilnetze mit je einer Teilsammelschiene (43, 44) unterteilten Bordnetzes (11) angeschlossen sind.

10. Anlage nach 1 bis 4, dadurch gekennzeichnet, daß der Längstransformator (17) ein Übersetzungsverhältnis von 1:1 besitzt.
